# EUROPÄISCHE PATENTSCHRIFT

(11) **EP 0 375 916 B1**
(45) Veröffentlichungstag und Bekanntmachung des Hinweises auf die Patenterteilung: **04.08.1993**
(21) Anmeldenummer: 89121359.7
(22) Anmeldetag: 18.11.1989
(51) Int. Cl.: F16K 11/07, F15B 13/01

(54) **Wegeventil zum Steuern eines Hydraulikzylinders**
Directional valve for controlling a hydraulic cylinder
Distributeur pour commander un cylindre hydraulique

(30) Priorität: 28.12.1988 DE 3844071
(43) Veröffentlichungstag der Anmeldung: 04.07.1990
(73) Patentinhaber: ROBERT BOSCH GMBH, 70442 Stuttgart (DE)
(72) Erfinder: Olbrich, Gottfried, Dipl.-Ing., D-7123 Sachsenheim (DE)

(56) Entgegenhaltungen:
- DE-A- 2 723 854
- DE-A- 2 929 232
- DE-A- 3 219 907
- US-A- 3 616 817

## Beschreibung

Die Erfindung betrifft ein Wegeventil zum Steuern eines Hydraulikzylinders, insbesondere in einem hydraulischen Hubwerk zum Heben, Senken und Halten eines Arbeitsgeräts, der im Oberbegriff des Anspruchs 1 definierten Gattung.

Bei solchen aus der Praxis vorbekannten Wegeventilen, deren Steuerschieber je nach gewünschter Verstellung des Hydraulikzylinders in die eine oder andere Verschieberichtung mehr oder weniger stark manuell verschoben wird, dient das integrierte Sitzventil dazu, den Hydraulikzylinder in der erreichten Verstellage auch über längere Zeit hinweg zu halten. Das Sitzventil schließt leckagefrei und ein durch unvermeidbare Leckage über den Steuerschieber sich einstellender Druckabfall bleibt somit ohne Einfluß auf den Druck am Arbeitsanschluß und damit am Hydraulikzylinder. Zur Aufsteuerung des Sitzventils zwecks Druckreduzierung am Arbeitsanschluß wird mittels des Steuerschiebers die Entlastungsbohrung aufgesteuert. Dadurch reduziert sich der auf das Ventilglied des Sitzventils wirkende hydraulische Schließdruck und das Sitzventil beginnt sich unter der Wirkung des auf das Ventilglied wirkenden Öffnungsdrucks zu öffnen. Sobald das Sitzventil geöffnet hat, strömt Druckmittel über das geöffnete Sitzventil zum Entlastungsanschluß und der Hydraulikzylinder beginnt sich zu verstellen. Ein vom Hydraulikzylinder betätigtes Arbeitsgerät senkt sich. Der an der Entlastungsbohrung auf den Steuerschieber quer zu dessen Längsachse wirkende Druck hat eine Querbelastung des Steuerschiebers zur Folge. Dadurch greift an dem Steuerschieber eine quer zu dessen Verschieberichtung gerichtete Kraft an, was zu einer einseitigen Steuerschieberlage führt. Die Folge davon ist eine erhöhte Steuerschieberreibung mit einhergehender Schwergängigkeit der Steuerschieberverstellung und ein Leckstrom aus der Entlastungsbohrung, der unzulässig hoch ist und langfristig zu einem Verstellen des Hydraulikzylinders trotz geschlossenem Sitzventil führt.

Ferner ist aus der EP-A-0 110 126 ein elektromagnetisch betätigtes Wegeventil bekannt, bei dem ein angeschlossenes hydraulisches Hubwerk durch ein vorgesteuertes Sitzventil abgesperrt wird. Hier ist ein in die Wirkverbindung zwischen Magnetanker und Steuerschieber geschalteter Stößel als Vorsteuerschieber ausgebildet, der die vom Sitzventil zum Tank geführte Steuerleitung steuert, wobei eine Entlastungsbohrung der Steuerleitung radial an einen zylindrischen Abschnitt des Vorsteuerschiebers heranführt. Durch die Abdichtung der Entlastungsbohrung am kleinen Durchmesser des Stößels läßt sich der Leckölstrom zwar verringern, das Problem der Querbelastung des Vorsteuerschiebers mit seinen nachteiligen Folgen wird dadurch nicht behoben. Ferner führt die Vorsteuerung des Sitzventils mit Hilfe des Stößels zu einem erhöhten Aufwand.

### Vorteile der Erfindung

Das erfindungsgemäße Wegeventil mit den kennzeichnenden Merkmalen des Anspruchs 1 hat den Vorteil, daß durch die erfindungsgemäße Erzeugung einer Kompensationskraft am Steuerschieber, die der an der Mündung der Entlastungsbohrung wirkenden Querkraft entgegengerichtet ist, der Steuerschieber eine weitgehend zentrierte Lage innerhalb der Gehäusebohrung erhält, in welcher der Steuerschieber eine geringe Reibung hat und in welcher der aus der vom Steuerschieber geschlossenen Entlastungsbohrung ausfließende Leckstrom auf ein zulässiges Maß reduziert ist. Als Kompensationsdruck wird der Zwischendruck verwendet, der durch die Leckage an der Entlastungsbohrung auftritt. Der von dem Kompensationsdruck beaufschlagte Oberflächenabschnitt des Steuerschiebers, die sog. Kompensationsfläche, wird dabei so bemessen, daß die vom Druck an der Entlastungsbohrung auf den Steuerschieber ausgeübte Querkraft von der durch den Kompensationsdruck an der Kompensationsfläche erzeugten Kompensationskraft ganz oder teilweise kompensiert wird.

Durch die in den weiteren Ansprüchen aufgeführten Maßnahmen sind vorteilhafte Weiterbildungen und Verbesserungen des im Anspruch 1 angegebenen Wegeventils möglich.

Besonders zweckmäßige konstruktive Maßnahmen zur Erzeugung einer der Querkraft entgegengerichteten Kompensationskraft am Steuerschieber bestehen gemäß einer Ausführungsform der Erfindung darin, daß der Steg in der Bohrungswand der Gehäusebohrung vorgesehen ist, der den Steuerschieber unter Belassung des Drosselspaltes umschließt und einen zwischen Bohrungswand und Steuerschieber vorhandenen Ringraum in die Kompensationskammer und die Entlastungskammer unterteilt. Die Mündung der Entlastungsbohrung ist im Steg angeordnet und der Steg hat einen solchen Verlauf, daß die axiale Länge der Kompensationskammer in dem der Entlastungsbohrung diametral gegenüberliegenden Bereich wesentlich größer ist als die axiale Länge in dem der Entlastungsbohrung unmittelbar benachbarten Bereich. Durch diese konstruktive Gestaltung wird ein Regelmechanismus geschaffen, durch welchen sich ein Gleichgewicht zwischen Querkraft und entgegengerichteter Kompensationskraft einstellt und der Schieber eine "schwimmende" Lage erhält. Der aus der Entlastungsbohrung austretende Leckstrom fließt in die Kompensationskammer und wirkt auf die Kompensationsfläche am Steuerschieber. Dadurch wird der Steuerschieber zur Mündung der Entlastungsbohrung hin bewegt, wodurch die Spaltbreite zwischen der Mündung der Entlastungsbohrung und der Oberfläche des Steuerschiebers kleiner wird. Dadurch verringert sich wiederum der Leckstrom. Gleichzeitig wird der Drosselspalt zwischen Steg und Steuerschieber größer, so daß mehr Leckstrom aus der Kompensationskammer in die Entlastungskammer entweicht. Durch diese beiden Effekte sinkt der Druck in der Kompensationskammer soweit ab, bis die Querkraft und die Kompensationskraft ein Gleichgewicht finden.

Der erfindungsgemäße Stegverlauf läßt sich auf verschiedene Weise realisieren. Bevorzugt wird in einer Ausführungsform der Erfindung der Steg aus zwei diametral im Axialabstand voneinander angeordneten Halbringabschnitten zusammengesetzt, die über zwei zur Achse der Gehäusebohrung parallel verlaufende axiale Stegabschnitte miteinander verbunden sind. Die Mündung der Entlastungsbohrung ist dabei in einem der Halbringabschnitte etwa mittig angeordnet.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines Wegeventils,
- Fig. 2 und 3: jeweils eine Darstellung druckbeaufschlagter Flächen am Steuerschieber im Bereich der Kompensationskammer des Wegeventils in Fig. 1, und zwar in Draufsicht (Fig. 2) und in Seitenansicht (Fig. 3).

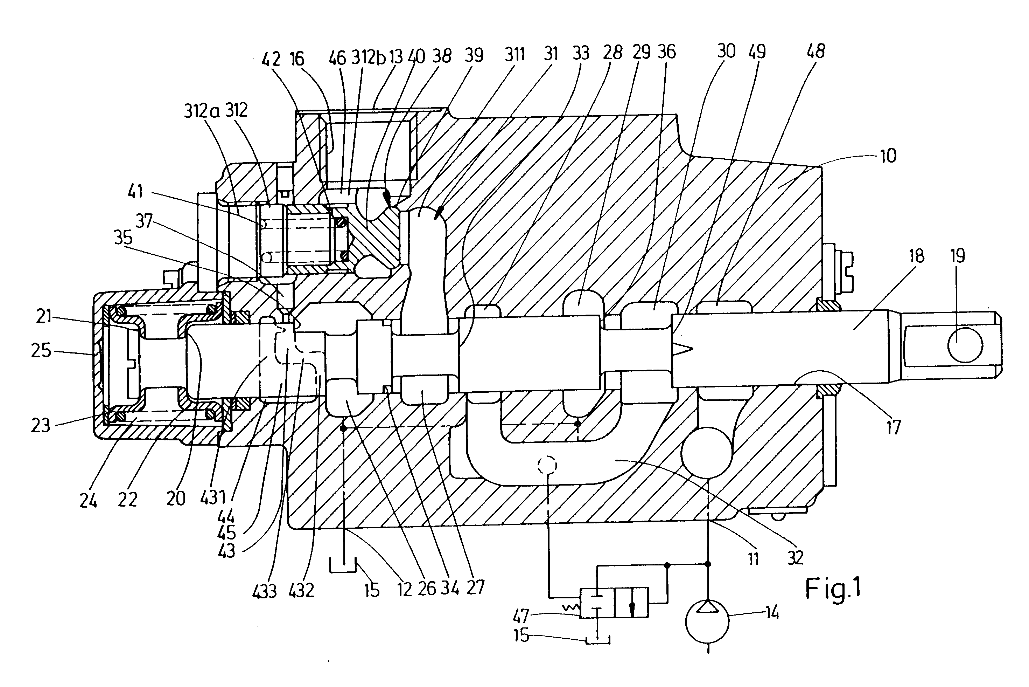

Das in Fig. 1 im Längsschnitt dargestellte Wegeventil dient zum Steuern eines Hydraulikzylinders in einem hydraulischen Hubwerk zwecks Heben, Senken und Halten eines Arbeitsgeräts. Solche Hubwerke werden beispielsweise an Landmaschinen oder landwirtschaftlichen Fahrzeugen verwendet. Das Wegeventil weist ein Ventilgehäuse 10 mit drei gesteuerten Ventilanschlüssen 11,12,13 auf. Von den Ventilanschlüssen 11 - 13 sind der Druckanschluß 11 zum Anschließen einer Druckmittelquelle 14 und der Entlastungsanschluß 12 zum Anschließen eines Entlastungsraums 15, z.B. eines Hydrauliköl-Vorratsbehälters, nur schematisch angedeutet. Am Druckanschluß 11 liegt außerdem noch ein Arbeitsanschluß und ein Steuereingang einer Druckwaage 47, deren anderer Arbeitsanschluß mit dem Entlastungsraum 15 verbunden ist. Der Arbeitsanschluß 13 ist mit einem Innengewinde 16 versehen, in welches eine nicht dargestellte Anschlußleitung für den Hydraulikzylinder des Hubwerkes eingeschraubt wird. Zum Steuern der drei Ventilanschlüsse 11 - 13 ist in einer längsdurchgehenden Gehäusebohrung 17 im Ventilgehäuse 10 ein Steuerschieber 18 axial verschieblich geführt. Der Steuerschieber 18 steht auf beiden Seiten des Ventilgehäuses 10 vor und trägt an seinem einen Stirnende eine Öse 19 zum Befestigen eines nicht dargestellten Handhebels zur manuellen Verschiebung des Steuerschiebers 18 und an seinem anderen Ende zwei Radialschultern 20,21, die einander zugekehrt sind. An jeder Radialschulter 20 bzw. 21 liegt ein Federteller 22 bzw. 23 an. Zwischen den beiden Federtellern 22,23 wird eine Druckfeder 24 gehalten. Der Federteller 22 stützt sich auf der Stirnseite des Ventilgehäuses 10 und der Federteller 23 am Boden einer das Steuerschieberende überdeckenden Kappe 25 ab, die auf der Stirnseite des Ventilgehäuses 10 befestigt ist. Die Druckfeder 24 hält den Steuerschieber 18 in seiner in Fig. 1 dargestellten Grundstellung und erzeugt bei Verschiebung des Steuerschiebers 18 in jede Verschieberichtung ein Rückstellkraft.

In der Gehäusebohrung 17 sind mehrere, im Axialabstand voneinander angeordnete, ringförmige Kammern vorgesehen, und zwar in der genannten Reihenfolge eine Entlastungskammer 26, die mit dem Entlastungsanschluß 12 verbunden ist, eine Arbeitskammer 27, die über einen Kanal 31 mit dem Arbeitsanschluß 13 in Verbindung steht, eine Kammer 28, eine weitere Entlastungskammer 29, die ebenfalls mit dem Entlastungsanschluß 12 verbunden ist, eine weitere Kammer 30, die über einen Kanal 32 mit der Kammer 28 verbunden ist, und eine Druckkammer 48, die mit dem Druckanschluß 11 verbunden ist. An dem Kanal 32 ist der zweite federbelastete Steuereingang der Druckwaage 47 angeschlossen. Der Steuerschieber 18 weist mehrere Steuerkanten auf, von denen die erste Steuerkante 33 zum Steuern der Verbindung zwischen Kammer 28 und Arbeitskammer 27, die zweite Steuerkante 34 zum Steuern der Verbindung zwischen Arbeitskammer 27 und Entlastungskammer 26, die dritte Steuerkante 35 zum Steuern einer noch nachfolgend beschriebenen Entlastungsbohrung 37, die vierte Steuerkante 36 zum Steuern der Verbindung zwischen Kammer 30 und Entlastungskammer 29 und die fünfte Steuerkante 49 zum Steuern der Verbindung zwischen Druckkammer 48 und Kammer 30 dient. Die Steuerkanten sind dabei so am Steuerschieber 18 angeordnet, daß in dessen Grundstellung (Fig. 1) nur die Kammer 30 mit der Entlastungskammer 29 verbunden ist und alle anderen Kammern 26,27,28,30,48 gegenseitig abgesperrt sind, sowie die Entlastungsbohrung 37 geschlossen ist. Zwischen der Arbeitskammer 27 und dem Arbeitsanschluß 13 ist ein im Ventilgehäuse 10 integriertes Sitzventil 38 angeordnet. Hierzu ist in dem Kanal 31 ein von der Kanalwand radial vorspringender Ventilsitz 39 vorgesehen, der den Kanal 31 in zwei Teilkanäle 311 und 312 unterteilt. Der mit der Arbeitskammer 27 verbundene Teilkanal 311 verläuft dabei rechtwinklig und der im Durchmesser größere Teilkanal 312, der mit dem Arbeitsanschluß 13 in Verbindung steht, parallel zur Gehäusebohrung 17. Mit dem Ventilsitz 39 wirkt ein Ventilglied 40 zusammen, das im zweiten Teilkanal 312 axial verschieblich geführt ist. Das mit einer Ventilschließfeder 41 belastete Ventilglied 40 dichtet einen Kanalabschnitt 312a des zweiten Teilkanals 312 gegenüber einem Kanalabschnitt 312b ab, der mit dem Arbeitsanschluß 13 über eine zum ersten Teilkanal 311 parallele Querbohrung 46 verbunden ist. Beide Kanalabschnitte 312a und 312b stehen nur durch eine Drosselbohrung 42 im Ventilkörper 40 miteinander in Verbindung. Der Teilkanal 312 ist auf der Stirnseite des Ventilgehäuses 10 flüssigkeitsdicht abgeschlossen. Von dem Kanalabschnitt 312a geht die Entlastungsbohrung 37 aus, die in der Gehäusebohrung 17 radial mündet. Die Entlastungsbohrung 37 ist mündungsseitig von dem Steuerschieber 18 abgeschlossen und kann bei entsprechender Verschiebung des Steuerschiebers 18 über die Steuerkante 35 aufgesteuert werden.

Die Wirkungsweise des hydraulischen Wegeventils ist wie folgt:
In der in Fig. 1 gezeigten Stellung ist das Sitzventil 38 geschlossen, und am Arbeitsanschluß 13 und damit am Hydraulikzylinder steht ein bestimmter Lastdruck an. Der an der Druckmittelquelle 14 über den Druckanschluß 11 anstehende Druckmittelstrom fließt über die geöffnete Verbindung an der Druckwaage 47 zum Druckmittelvorratsbehälter (Entlastungsraum 15) zurück. Das Druckmittel fließt in sog. Neutralumlauf. Soll nunmehr das Arbeitsgerät angehoben werden, so muß über den Arbeitsanschluß 13 ein höherer Druck in den Hydraulikzylinder eingesteuert werden. Hierzu wird der Steuerschieber 18 über den Handhebel in Fig. 1 nach rechts verschoben. Dabei wird die Verbindung zwischen der Kammer 30 und der Entlastungskammer 29 geschlossen und die Verbindung zwischen Druckkammer 48 und Kammer 30 sowie die Verbindung zwischen Kammer 28 und Arbeitskammer 27 geöffnet. Die Druckwaage 47 sperrt den Neutralumlauf, und der Druck in der Arbeitskammer 27 steigt an. Sobald dieser größer ist als der Schließdruck am Ventilkörper 40 öffnet das Sitzventil 38 und der Druck am Arbeitsanschluß 13 steigt. Der Hydraulikzylinder wird verschoben. Ist die gewünschte Stellung des Hydraulikzylinders erreicht, so wird der Steuerschieber 18 in seine Grundstellung zurückgestellt. Der Druck in der Arbeitskammer 27 sinkt ab und das Sitzventil 38 schließt. Der Hydraulikzylinder wird in seiner neu eingestellten Lage unverändert gehalten.

Soll das Arbeitsgerät gesenkt werden, so ist der Druck am Arbeitsanschluß 13 zu reduzieren. Hierzu wird der Steuerschieber 18 in Fig. 1 nach links verschoben, so daß die Steuerkante 35 über die Mündung der Entlastungsdrossel 37 hinweg gleitet und letztere nunmehr mit der Entlastungskammer 26 verbunden ist. Das im Kanalabschnitt 312a des Teilkanals 312 befindliche Druckmittel strömt nunmehr in die Entlastungskammer 26 und von dort über den Entlastungsanschluß 12 zum Entlastungsraum 15. Wegen der Drossel 42 sinkt der Druck in dem Kanalabschnitt 312a schnell ab und damit der auf dem Ventilkörper 40 wirkende hydraulische Schließdruck. Ist der Schließdruck unter den auf dem Ventilkörper 40 vom Teilkanal 311 her wirkenden Öffnungsdruck abgesunken, so hebt der Ventilkörper 40 vom Ventilsitz 39 ab, das Sitzventil 38 ist geöffnet und Druckmittel strömt vom Ventilanschluß 13 über den Teilkanal 311, die Arbeitskammer 27 in die nunmehr zur Arbeitskammer 27 hin geöffnete Entlastungskammer 26. Der Druck am Arbeitsanschluß 13 sinkt, und der Hydraulikzylinder verschiebt sich in eine neue Position. Ist die gewünschte Position erreicht, so wird der Steuerschieber 18 wieder in seine in Fig. 1 gezeigte Grundstellung zurückgestellt, in welcher er die Entlastungsbohrung 37 verschließt. Über die Drossel 42 steht der Druck am Arbeitsanschluß 13 bei geschlossener Entlastungsbohrung 37 auch im Kanalabschnitt 312a an und wirkt in Schließrichtung auf den Ventilkörper 40. Das Sitzventil 38 schließt, und der Hydraulikzylinder wird in seiner neu eingenommenen Position unveränderlich gehalten.

Der Druck in der Entlastungsbohrung 37, der bei geschlossener Entlastungsbohrung 37 dem Lastdruck am Arbeitsanschluß 13 entspricht, bringt auf den Steuerschieber 18 eine quer zu dessen Längsachse wirkende Querbelastung. Dadurch erhält der Steuerschieber 18 innerhalb der Gehäusebohrung 17 eine einseitige Lage, was einerseits zu einer erhöhten Steuerschieberreibung und andererseits zu einer vergrößerten Spalthöhe zwischen Mündung der Entlastungsbohrung 37 und Oberfläche des Steuerschiebers 18 führt, als dessen Folge ein erhöhter Leckstrom aus der Entlastungsbohrung 37 austritt. Dieser Leckstrom ist unzulässig hoch und führt langfristig zu einem Druckabfall und einer Hydraulikzylinderverstellung in der Stellung "Halten" des Steuerschiebers 18. Um dies zu vermeiden, ist in der Gehäusebohrung 17 ein Steg 43 vorgesehen, der den Steuerschieber 18 unter Belassung eines Drosselspaltes umschließt und einen zwischen Bohrungswand und Steuerschieber 18 vorhandenen Ringraum als eine sog. Kompensationskammer 44 von der Entlastungskammer 26 trennt. Die Mündung der Entlastungsbohrung 37 liegt innerhalb des Stegs 43, und der Steg 43 hat einen solchen Verlauf, daß die axiale Länge der Kompensationskammer 44 in dem der Entlastungsbohrungsmündung diametral gegenüberliegenden Bereich wesentlich größer ist als die axiale Länge der Kompenzationskammer 44 in dem der Entlastungsbohrungsmündung unmittelbar benachbarten Bereich. Hierzu weist der Steg 43 zwei diametral im Axialabstand voneinander angeordnete halbringförmige Stegabschnitte 431 und 432 auf, die über zwei zur Bohrungsachse parallel verlaufende axiale Stegabschnitte miteinander verbunden sind, von denen in Fig. 1 nur der Stegabschnitt 433 zu sehen ist. Die Mündung der Entlastungsbohrung 37 ist etwa mittig in dem halbringförmigen Stegabschnitt 431 angeordnet. Der Steg 43 ist einstückig mit dem Ventilgehäuse 10 und ist durch Einarbeiten von Nuten in die Bohrungswand herausgearbeitet, die sich jeweils über weniger als die Hälfte des Umfangs der Gehäusebohrung 17 erstrecken und zusammen zwei im Axialabstand voneinander angeordnete Nutpaare aus zwei mit unterschiedlichen axialen Längen einander diametral gegenüberliegenden Nuten bilden. Das eine Nutpaar bildet die Kompensationskammer 44 und das andere Nutpaar die Entlastungskammer 26.

Die Wirkung der beschriebenen Kompensationskammer 44 ist wie folgt:
Der Lastdruck p_{L} an dem Arbeitsanschluß 13 steht über die Drossel 42, den Kanalabschnitt 312a und die Entlastungsbohrung 37 an der Mündung der Entlastungsbohrung 37 an und wirkt hier auf den Steuerschieber 18. Die dadurch entstehende Querkraft drückt den Steuerschieber 18 von der Mündung der Entlastungsbohrung 37 weg. Dadurch vergrößert sich die Spalthöhe zwischen Mündung der Entlastungsbohrung 37 und der Oberfläche des Steuerschiebers 18 und Leckstrom fließt in der Kompensationskammer 44 und von dort über den zwischen Steg 43 und Bohrungswand der Gehäusebohrung 17 gebildeten Ringspalt in die Entlastungskammer 26. Dadurch bildet sich in der Kompensationskammer 44 ein Zwischen- oder Kompensationsdruck p_{K}. Durch die größere axiale Länge der Kompensationskammer 44 in dem der Mündung der Entlastungsbohrung 37 diametral gegenüberliegenden Bereich ist am Steuerschieber 18 eine vergrößerte Kompensationsfläche 45 geschaffen, die genau der Entlastungsbohrung 37 gegenüberliegt. Auf diese Kompensationsfläche 45 wirkt der Kompensationsdruck p_{K} und drückt den Steuerschieber 18 in Richtung zur Entlastungsbohrung 37. Nunmehr setzt folgender Regelmechanismus ein: Durch das Zurückdrücken des Steuerschiebers 18 in Richtung Mündung der Entlastungsbohrung 37 wird der in die Kompensationskammer 44 fließende Leckstrom kleiner, da die Spalthöhe zwischen Mündung der Entlastungsbohrung 37 und Steuerschieber 18 sich verringert. Gleichzeitig wird aber die Spaltbreite des Ringspalts zwischen Steg 43 und Bohrungswand der Gehäusebohrung 17 größer. Durch beide Effekte sinkt der Druck p_{K} in der Kompensationskammer 44 soweit ab, bis die entgegengesetzt wirkenden Querkräfte bei einer bestimmten Steuerschieberausrichtung ein Gleichgewicht finden. Der Steuerschieber 18 nimmt eine schwimmende Lage ein, in welcher die Steuerschieberreibung an der Bohrungswand der Gehäusebohrung 17 minimal ist und der aus der Entlastungsbohrung 37 austretende Leckstrom ausreichend klein ist, so daß die "Haltefunktion" des Wegeventils nicht beeinträchtigt wird.

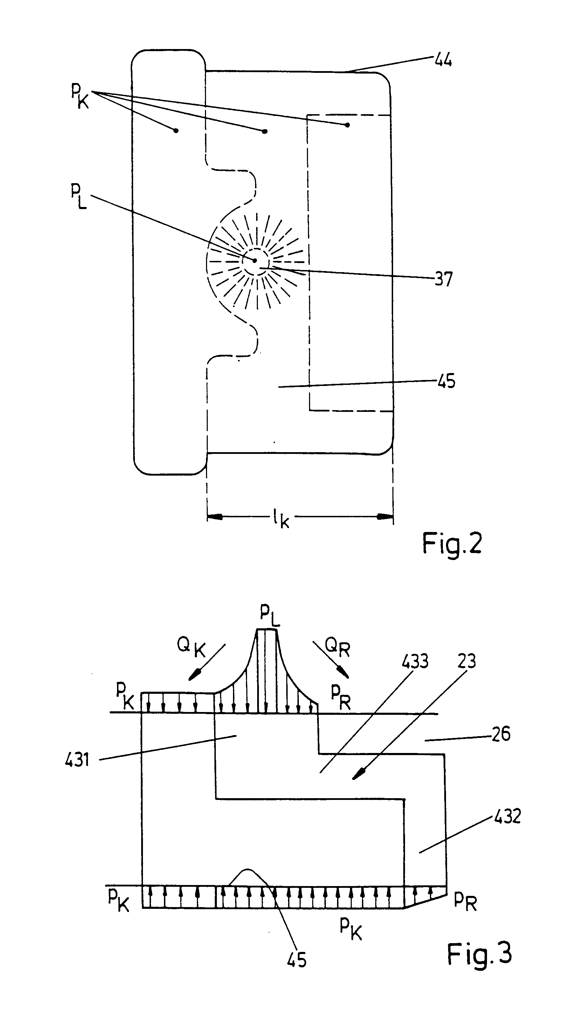

In Fig. 2 und 3 sind die mit Lastdruck p_{L} und mit Kompensationsdruck p_{K} beaufschlagten Flächen von Kompensationskammer 44 und Steuerschieber 18 in Draufsicht und Seitenansicht dargestellt. In Fig. 2 ist die Mündung der Entlastungsbohrung 37 strichliniert eingezeichnet, da sie auf der der Kompensationsfläche 45 gegenüberliegenden Seite des Steuerschiebers 18 liegt. Im Bereich der Mündung wirkt der Lastdruck p_{L} auf den Steuerschieber 18. Der Leckstrom fließt über die eine Seite des Stegs 43 in die Kompensationskammer 44 und erzeugt dort den Kompensationsdruck p_{K}. Ein Teil des Leckstroms fließt über die andere Seite des Stegs 43 unmittelbar in den Entlastungsraum 26 und hat hier den Entlastungdruck p_{R}. Die Grenzen innerhalb welcher der Lastdruck p_{L} auf den Steuerschieber 18 wirksam ist, sind in Fig. 2 strichliniert eingezeichnet. Die Grenzen der Kompensationskammer 44 sind ausgezogen dargestellt. Die Kompensationsfläche 45 am Steuerschieber 18 hat die wirksame Länge l_{K}.

In Fig. 3 ist der geschilderte Druckverlauf skizziert. Deutlich ist der Druckabfall über den Steg 43 zu sehen. Durch den zur Kompensationskammer 44 fließenden Leckstrom Q_{K} fällt der Lastdruck p_{L} in Stegmitte zur Begrenzungskante der Kompensationskammer 44 hin auf den Kompensationsdruck p_{K} ab. Durch den unmittelbar in die Entlastungskammer 26 fließenden Leckstrom Q_{R} sinkt der Lastdruck p_{L} von Stegmitte bis zur der die Entlastungskammer 26 begrenzenden Stegkante auf den Entlastungsdruck p_{R} ab. Der aus der Kompensationskammer 44 über den Ringspalt zwischen Steg 43 und Bohrungswand der Gehäusebohrung 17 fließende Leckstrom verursacht über die Stegbreite einen Druckabfall vom Kompensationsdruck p_{K} auf Entlastungsdruck p_{R}. Die Summe aller auf diametralen Seiten des Steuerschiebers 18 wirkenden Drücke erzeugen an den beaufschlagten Flächen zwei einander entgegengerichtete gleich große Querkräfte, so daß der Steuerschieber 18 in der Gehäusebohrung 17 eine schwimmende Stellung ohne Anlage an der Bohrungswand einnimmt.

## Patentansprüche

1. Wegeventil zum Steuern eines Hydraulikzylinders, insbesondere in einem hydraulischen Hubwerk zum Heben, Senken und Halten eines Arbeitsgeräts, mit einem mindestens drei gesteuerte Ventilanschlüsse (11, 12, 13) aufweisenden Ventilgehäuse (10), von denen ein erster Ventilanschluß (Druckanschluß 11) zum Anschließen einer hydraulischen Druckmittelquelle (14), ein zweiter Ventilanschluß (Entlastungsanschluß 12) zum Anschließen eines hydraulischen Entlastungsraums (15) und ein dritter Ventilanschluß (Arbeitsanschluß 13) zum Anschließen des Hydraulikzylinders dient, mit einem dem Arbeitsanschluß (13) vorgeordneten Sitzventil (38), das mittels einer steuerbaren Entlastungsbohrung (37) schließdruckseitig entlastbar ist, mit einem in einer Gehäusebohrung (17) axial verschiebbaren Steuerschieber (18), der Steuerkanten (33, 34, 35, 36) zum Steuern der Ventilanschlüsse (11, 12, 13) und der Entlastungsbohrung (37), die radial zum Steuerschieber (18) in der Gehäusebohrung (17) mündet, aufweist, dadurch gekennzeichnet, daß im Bereich der Gehäusebohrung (17) bei der Mündung der Entlastungsbohrung (37) ein Steg (43) vorgesehen ist, der unter Belassung eines Drosselspalts eine Kompensationskammer (44) von einer mit dem Entlastungsanschluß (12) in Verbindung stehenden Entlastungskammer (26) abtrennt, wobei der Steg (43) einen solchen Verlauf hat, daß ein der Mündung der Entlastungsbohrung (37) gegenüberliegender, in der Kompensationskammer (44) angeordneter Oberflächenabschnitt (45) des Steuerschiebers (18) mit einem eingestellten Druck (p_{K}) derart beaufschlagt wird, daß dessen auf den Steuerschieber (18) radial wirkende Druckkraft die vom Druck (p_{L}) an der Mündung der Entlastungsbohrung (37) auf den Steuerschieber (18) ausgeübte Querkraft mindestens teilweise kompensiert.

2. Ventil nach Anspruch 1, dadurch gekennzeichnet, daß der Steg (43) in der Bohrungswand der Gehäusebohrung (17) vorgesehen ist, der den Steuerschieber (18) unter Belassung des Drosselspaltes umschließt und einen zwischen Bohrungswand der Gehäusebohrung (17) und Steuerschieber (18) vorhandenen Ringraum in die Kompensationskammer (44) und die Entlastungskammer (26) unterteilt, daß die Mündung der Entlastungsbohrung (37) im Steg (43) liegt und daß der Steg (43) einen solchen Verlauf hat, daß die axiale Länge der Kompensationskammer (44) in dem der Mündung der Entlastungsbohrung (37) diametral gegenüberliegenden Bereich wesentlich größer ist als in dem der Mündung der Entlastungsbohrung (37) unmittelbar benachbarten Bereich.

3. Ventil nach Anspruch 2, dadurch gekennzeichnet, daß das Verhältnis der axialen Längen der Kompensationskammer (44) in den genannten Bereichen entsprechend der zur Kompensation der Querkraft erforderlichen Kompensationkraft bei vorgegebenem Kompensationsdruck bemessen ist.

4. Ventil nach Anspruch 2 oder 3, dadurch gekennzeichnet, daß der Steg (43) zwei diametral im Axialabstand voneinander angeordnete halbringförmige Stegabschnitte (431,432) aufweist, die über zwei zur Achse der Gehäusebohrung (17) parallel verlaufende axiale Stegabschnitte (433) miteinander verbunden sind, und daß die Mündung der Entlastungsbohrung (37) in dem einen halbringförmigen Stegabschnitt (431) etwa mittig angeordnet ist.

5. Ventil nach Anspruch 4, dadurch gekennzeichnet, daß der Steg (43) durch Einarbeiten von Nuten in die Bohrungswand der Gehäusebohrung (19) gebildet ist, die sich jeweils über weniger als die Hälfte des Umfangs der Gehäusebohrung (17) erstrecken und zusammen zwei im Axialabstand voneinander angeordnete Nutenpaare aus zwei mit unterschiedlichen axialen Längen einander diametral gegenüberliegenden Nuten bilden, wobei das eine Nutenpaar zusammen mit dem Steuerschieber (18) die Kompensationskammer (44) und das andere Nutenpaar zusammen mit dem Steuerschieber (18) die Entlastungskammer (26) begrenzt.

6. Ventil nach einem der Ansprüche 2 - 5, dadurch gekennzeichnet, daß in der Gehäusebohrung (17) auf der von der Kompensationskammer (44) abgekehrten Seite der Entlastungskammer (26) mit Axialabstand von letzterer eine mit dem Arbeitsanschluß (13) verbundene Arbeitskammer (27) und wiederum im Axialabstand von dieser eine mit dem Druckanschluß (11) verbindbare Kammer (28) vorgesehen ist und daß die erste Steuerkante (33) des Steuerschiebers (18) die Verbindung zwischen der Kammer (28) und der Arbeitskammer (27), die zweite Steuerkante (34) des Steuerschiebers (18) die Verbindung zwischen der Arbeitskammer (27) und der Entlastungskammer (26) und die dritte Steuerkante (35) des Steuerschiebers (18) die Verbindung der Entlastungsbohrung (37) zur Entlastungskammer (26) hin steuert.

7. Ventil nach Anspruch 6, dadurch gekennzeichnet, daß die Verbindung zwischen Arbeitskammer (27) und Arbeitsanschluß (13) als Gehäusekanal (31) ausgebildet ist, der durch einen radial von der Kanalwand vorspringenden Ventilsitz (39) in einen mit der Arbeitskammer (27) in Verbindung stehenden ersten Teilkanal (311) und einen mit dem Arbeitsanschluß (13) in Verbindung stehenden zweiten Teilkanal (312) unterteilt ist, daß im zweiten Teilkanal (312) das mit dem Ventilsitz (39) zusammenwirkende Sitzventil (38) mit seinem Ventilglied (40) axial verschieblich geführt ist, wobei das Ventilglied (40) von einer Ventilschließfeder (41) belastet ist und eine mit dem am Arbeitsanschluß (13) herrschenden Druck (p_{L}) beaufschlagte, in Schließrichtung wirkende Steuerfläche aufweist, daß das Ventilglied (40) einen von seiner Steuerfläche begrenzten Kanalabschnitt (312a) des zweiten Teilkanals (312) zum Arbeitsanschluß (13) hin abtrennt, der über eine Drosselbohrung (42) mit diesem Kanalabschnitt (312a) verbunden ist, und daß die vom Steuerschieber (18) gesteuerte Entlastungsbohrung (37) von dem Kanalabschnitt (312a) des zweiten Teilkanals (312) abgeht.

8. Ventil nach Anspruch 7, dadurch gekennzeichnet, daß der erste Teilkanal (311) rechtwinklig und der zweite Teilkanal (312) parallel zur Gehäusebohrung (17) verläuft und daß eine Verbindung zwischen dem zweiten Teilkanal (312) und dem Arbeitsanschluß (13) durch eine nahe des Ventilsitzes (39) mündende, zum ersten Teilkanal (311) parallele Querbohrung (46) realisiert ist.

9. Ventil nach einem der Ansprüche 6 - 8, dadurch gekennzeichnet, daß in der Gehäusebohrung (17) auf der von der Arbeitskammer (27) abgekehrten Seite der Kammer (28) im Axialabstand von letzterer eine mit dem Entlastungsanschluß (12) verbundene weitere Entlastungskammer (29), im Axialabstand von dieser eine über einen Kanal (32) mit der Kammer (28) verbundene weitere Kammer (30) und wiederum im Axialabstand von letzterer eine mit dem Druckanschluß (11) verbundene Druckkammer (48) vorgesehen ist und daß der Steuerschieber (18) eine vierte und fünfte Steuerkante (36,49) trägt, welche die Verbindung zwischen der weiteren Kammer (30) und der weiteren Entlastungskammer (29) bzw. der weiteren Kammer (30) und der Druckkammer (48) steuert.

10. Ventil nach Anspruch 9, dadurch gekennzeichnet, daß die Steuerkanten (33,34,35,36,49) am Steuerschieber (18) so angeordnet sind, daß in der Grundstellung des Steuerschiebers (18) nur die weitere Kammer (30) mit der weiteren Entlastungskammer (29) verbunden ist und alle anderen Verbindungen zwischen den Kammern (26,27,28,30,48) ebenso wie die Entlastungsbohrung (37) abgesperrt sind.

## Claims

1. Directional control valve for controlling a hydraulic cylinder, in particular in a hydraulic lifting gear for lifting, lowering and holding an operating tool, having a valve housing (10) exhibiting at least three controlled valve connections (11, 12, 13), of which a first valve connection (pressure connection 11) serves the connection of a hydraulic pressure medium source (14), a second valve connection (relief connection 12) serves the connection of a hydraulic relief space (15) and a third valve connection (operating connection 13) serves the connection of the hydraulic cylinder, having a seat valve (38) which is disposed in front of the operating connection (13) and which can be relieved on the closing pressure side by means of a controllable relief bore (37), having a control slide (18) which is axially displaceable in a housing bore (17) and exhibits controlling edges (33, 34, 35, 36) for controlling the valve connections (11, 12, 13) and the relief bore (37), which merges radially into the control slide (18) in the housing bore (17), characterised in that in the region of the housing bore (17), at the mouth of the relief bore (37), there is provided a crosspiece (43), which, whilst at the same time leaving a choke gap, separates a compensation chamber (44) from a relief chamber (26) connected to the relief connection (12), the course taken by the crosspiece (43) being such that a superficial section (45) of the control slide (18) lying opposite the mouth of the relief bore (37) and disposed in the compensation chamber (44) is acted upon by a set pressure (p_{K}) in such a way that its compression force acting radially upon the control slide (18) compensates at least partially the transverse force exerted by the pressure (p_{L}) at the mouth of the relief bore (37) upon the control slide (18).

2. Valve according to Claim 1, characterised in that the crosspiece (43) is provided in the bore wall of the housing bore (17), which crosspiece encloses the control slide (18), whilst at the same time leaving a choke gap, and divides up an annular space, present between the bore wall of the housing bore (17) and the control slide (18), into the compensation chamber (44) and the relief chamber (26), in that the mouth of the relief bore (37) is situated in the crosspiece (43) and in that the course taken by the crosspiece (43) is such that the axial length of the compensation chamber (44) in the region lying diametrically opposite the mouth of the relief bore (37) is substantially greater than in the region lying directly adjacent to the mouth of the relief bore (37).

3. Valve according to Claim 2, characterised in that the ratio of the axial lengths of the compensation chamber (44) in the said regions is dimensioned, at a pre-determined compensation pressure, in accordance with the compensation force necessary to compensate the transverse force.

4. Valve according to Claim 2 or 3, characterised in that the crosspiece (43) exhibits two semi-annular crosspiece sections (431, 432), disposed diametrically at an axial distance apart, which are interconnected by two axial crosspiece sections (433) running parallel to the axis of the housing bore (17) and in that the mouth of the relief bore (37) is disposed approximately centrally in the one semi-annular crosspiece section (431).

5. Valve according to Claim 4, characterised in that the crosspiece (43) is formed by the incorporation of grooves into the bore wall of the housing bore (19) [sic], which grooves respectively extend across less than half the circumference of the housing bore (17) and together form two pairs of grooves, disposed at an axial distance apart, made up of two grooves of different axial lengths lying diametrically opposite each other, the one pair of grooves together with the control slide (18) bounding the compensation chamber (44) and the other pair of grooves together with the control slide (18) bounding the relief chamber (26).

6. Valve according to one of Claims 2 - 5, characterised in that in the housing bore (17), on that side of the relief chamber (26) facing away from the compensation chamber (44), there is provided, at an axial distance from the said relief chamber, an operating chamber (27) connected to the operating connection (13) and, in turn, at an axial distance from the said operating chamber, a chamber (28) which is connectable to the pressure connection (11) and in that the first controlling edge (33) of the control slide (18) controls the link between the chamber (28) and the operating chamber (27), the second controlling edge (34) of the control slide (18) controls the link between the operating chamber (27) and the relief chamber (26) and the third controlling edge (35) of the control slide (18) controls the linking of the relief bore (37) in the direction of the relief chamber (26).

7. Valve according to Claim 6, characterised in that the link between the operating chamber (27) and the operating connection (13) is configured as a housing passage (31), which is divided by a valve seat (39), projecting radially from the passage wall, into a first sub-passage (311) connected to the operating chamber (27) and a second sub-passage (312) connected to the operating connection (13), in that the seat valve (38) interacting with the valve seat (39), with its valve member (40), is guided in an axially displaceable manner in the second sub-passage (312), the valve member (40) being loaded by a valve-closing spring (41) and exhibiting a control surface, which is acted upon by the pressure (p_{L}) prevailing at the operating connection (13) and acts in the direction of closing, in that the valve member (40) separates a passage section (312a), bounded by its control surface, of the second sub-passage (312) in the direction of the operating connection (13), which is connected by a choke bore (42) to the said passage section (312a), and in that the relief bore (37) controlled by the control slide (18) starts from the passage section (312a) of the second sub-passage (312).

8. Valve according to Claim 7, characterised in that the first sub-passage (311) runs at right-angles and the second sub-passage (312) runs parallel to the housing bore (17) and in that a link between the second sub-passage (312) and the operating connection (13) is realised by a transverse bore (46) merging close to the valve seat (39) and lying parallel to the first sub-passage (311).

9. Valve according to one of Claims 6 - 8, characterised in that in the housing bore (17), on that side of the chamber (28) facing away from the operating chamber (27), there is provided, at an axial distance from the said chamber (28), a further relief chamber (29) connected to the relief connection (12), at an axial distance from the said relief chamber, a further chamber (30) connected by a passage (32) to the chamber (28) and, in turn, at an axial distance from the said further chamber, a pressure chamber (48) connected to the pressure connection (11) and in that the control slide (18) bears a fourth and fifth controlling edge (36, 49), which controls the link between the further chamber (30) and the further relief chamber (29) or between the further chamber (30) and the pressure chamber (48).

10. Valve according to Claim 9, characterised in that the controlling edges (33, 34, 35, 36, 49) on the control slide (18) are disposed such that, in the basic position of the control slide (18), only the further chamber (30) is connected to the further relief chamber (29) and all other links between the chambers (26, 27, 28, 30, 48), as well as the relief bore (37), are shut off.

## Revendications

1. Distributeur pour commander un vérin hydraulique notamment un mécanisme hydraulique de levage pour soulever, abaisser et maintenir un outil, avec un boîtier de distributeur (10) comportant au moins trois branchements commandés (11, 12, 13), le premier branchement (branchement de pression 11) servant à brancher une source de fluide hydraulique sous pression (14), un second branchement (branchement de décharge 12) servant à brancher une chambre de décharge hydraulique (bâche 15) et un troisième branchement (branchement de travail 13) servant à brancher le vérin hydraulique, avec une soupape à siège (38) qui se trouve en amont du branchement de travail (13) et qui permet la décharge du côté de la pression de fermeture par l'intermédiaire d'un perçage de décharge (37), commandé, un tiroir de commande (18) coulissant axialement dans un alésage (17) du boîtier, ce tiroir ayant des arêtes de commande (33, 34, 35, 36) pour commander les branchements (11, 12, 13) et l'alésage de décharge (37), débouchant radialement par rapport au tiroir de commande (18) dans l'alésage (17) du boîtier, distributeur caractérisé en ce qu'au niveau de l'alésage (17), à l'embouchure du perçage de décharge (37), il est prévu une entretoise (43) qui sépare une chambre de compensation (44) d'une chambre de décharge (26) communiquant avec le branchement de décharge (12), en laissant un intervalle d'étranglement, l'entretoise (43) ayant un tracé tel qu'un segment de surface (45) du tiroir de commande (18), dans la chambre de compensation (44) en regard de l'embouchure du perçage de décharge (37), soit sollicité par une pression réglée (p_{K}) de façon telle que la force de pression agissant radialement sur le tiroir de commande (18) compense au moins partiellement la force transversale exercée par la pression p_{L} à l'embouchure de l'alésage de décharge (37) sur le tiroir de commande (18).

2. Distributeur selon la revendication 1, caractérisé en ce que l'entretoise (43) est prévue dans la paroi de l'alésage (17) du boîtier qui entoure le tiroir de commande (18) en laissant l'intervalle d'étranglement et subdivise le volume annulaire existant entre la paroi de l'alésage (17) du boîtier et le tiroir de commande (18) en une chambre de compensation (44) et une chambre de décharge (26), l'embouchure du perçage de décharge (37) étant située dans l'entretoise (43) et cette entretoise (43) a un tracé tel que la longueur axiale de la chambre de compensation (44) dans la zone diamétralement opposée à l'embouchure du perçage de décharge (37) soit beaucoup plus grande que dans la zone directement voisine de l'embouchure du perçage de décharge (37).

3. Distributeur selon la revendication 2, caractérisé en ce que le rapport des longueurs axiales de la chambre de compensation (44) dans les zones évoquées est dimensionné en fonction de la force de compensation nécessaire pour compenser la force transversale pour une pression de compensation prédéterminée.

4. Distributeur selon la revendication 2 ou 3, caractérisé en ce que l'entretoise (43) se compose de deux segments d'entretoise (431, 432) en forme de demi-cercles, distants axialement l'un de l'autre, diamétralement, ces segments étant reliés par deux segments d'entretoise (433), axiaux, parallèles à l'axe de l'alésage (17) du boîtier et en ce que l'embouchure de l'alésage de décharge (37) dans l'un des segments d'entretoise (431) en forme de demi-anneaux, est sensiblement central.

5. Distributeur selon la revendication 4, caractérisé en ce que l'entretoise (43) est formée par l'usinage de rainures dans la paroi de l'alésage (17) du boîtier, et qui occupe toutefois moins que la moitié de la périphérie de l'alésage (17) du boîtier et qui en réunion forme deux paires de rainures axialement distantes, dont les rainures diamétralement opposées ont des longueurs axiales différentes, l'une des paires de rainures délimitant avec le tiroir de commande (18), la chambre de compensation (44) et l'autre paire de rainures délimitant avec le tiroir de commande (18), la chambre de décharge (26).

6. Distributeur selon l'une des revendications 2 à 5, caractérisé en ce que dans l'alésage (17) du boîtier, du côté de la chambre de décharge (26) opposée à la chambre de compensation (44), à une distance axiale de la chambre de décharge, il y a une chambre de travail (27) reliée au branchement de travail (13) et de nouveau à une distance axiale de cette chambre de travail, une chambre (28) susceptible d'être reliée au branchement (11) et la première arête de commande (33) du tiroir de commande (18) commande la liaison entre la chambre (28) et la chambre de travail (27), la seconde arête de commande (34) du tiroir de commande (18) commande la liaison entre la chambre de travail (27) et la chambre de décharge (26) et la troisième arête de commande (35) du tiroir de commande (18) commande la liaison entre le perçage de décharge (37) vers la chambre de décharge (26).

7. Distributeur selon la revendication 6, caractérisé en ce que la liaison entre la chambre de travail (27) et le branchement de travail (13) est en forme de canal (31) réalisé dans le boîtier, ce canal étant subdivisé par un siège de soupape (39) en saillie radialement par rapport à la paroi du canal en une première partie de canal (311) communiquant avec la chambre de travail (27) et une seconde partie de canal (312) communiquant avec le branchement de travail (13), la seconde partie de canal (312) recevant de manière coulissante axialement, un organe formant soupape (40) coopérant avec le siège (39) de la soupape à siège (38), l'organe formant soupape (40) étant chargée par un ressort de fermeture (41) et étant soumis à la pression (p_{L}) appliquée sur le branchement de travail (13), en ayant une surface de commande agissant dans le sens de la fermeture, l'organe formant soupape (40) étant séparé du branchement de travail (13) par un segment (312a) de la seconde partie de canal (312), segment délimité par sa surface de commande, ce branchement de travail étant relié par un perçage d'étranglement (42) à ce segment de canal (312a) et le perçage de décharge (37) commandé par le tiroir de commande (18) part du segment de canal (312a) de la seconde partie de canal (312).

8. Distributeur selon la revendication 7, caractérisé en ce que la première partie de canal (311) est perpendiculaire à l'alésage (17) du boîtier et la seconde partie de canal (312) est parallèle à cet alésage, et une liaison entre la seconde partie de canal (312) et le branchement de travail (13) est constituée par un perçage transversale (46) parallèle à la première partie de canal (311) et qui débouche à proximité du siège de soupape (39).

9. Distributeur selon l'une des revendications 6 à 8, caractérisé en ce que dans l'alésage (17) du boîtier, sur le côté de la chambre (28) opposée à la chambre de travail (27), à une distance axiale de celle-ci, il y a une seconde chambre de décharge (29) reliée au branchement de décharge (12) et à une distance axiale de cette chambre de décharge, il y a une autre chambre (30) reliée par un canal (32) à la chambre (28), et de nouveau à une distance axiale de la chambre (30), il y a une chambre de pression (48) reliée au branchement de pression (11), et le tiroir de commande (18) porte une quatrième et une cinquième arête de commande (36, 49) qui commande la liaison entre l'autre chambre (30) et l'autre chambre de décharge (29) ou l'autre chambre (30) et la chambre de pression (48).

10. Distributeur selon la revendication 9, caractérisé en ce que les arêtes de commande (33, 34, 35, 36, 49) sont prévues sur le tiroir de commande (18) pour qu'en position de base du tiroir de commande (18), seule l'autre chambre (30) soit reliée avec l'autre chambre de décharge (29) et que toutes les autres liaisons entre les chambres (26, 27, 28, 30, 48) et le perçage de décharge (37) soient coupées.
